# EUROPEAN PATENT APPLICATION

(11) **EP 4 726 581 A1**
(43) Date of publication of application: **15.04.2026**
(21) Application number: 24840007.9
(22) Date of filing: 05.07.2024
(51) Int. Cl.: G06F 21/33, H04L 9/08, G06F 21/73, G06F 21/60, H04L 9/32

(54) **ELECTRONIC DEVICE AND OPERATION METHOD OF ELECTRONIC DEVICE**

(30) Priority: 10.07.2023 KR 20230089199
(71) Applicant: Samsung Electronics Co., Ltd., Suwon-si, Gyeonggi-do 16677 (KR)
(72) Inventor: LEE, Jungyeon, Suwon-si, Gyeonggi-do 16677 (KR); FOKIN, Oleksandr, Kyiv 01032 (UA); SINELNIKOVA, Olha, Kyiv 01032 (UA); PARK, Minseok, Suwon-si, Gyeonggi-do 16677 (KR); PARK, Jihoon, Suwon-si, Gyeonggi-do 16677 (KR); LEE, Minhyoung, Suwon-si, Gyeonggi-do 16677 (KR)
(74) Representative: Walaski, Jan Filip
(86) International application number: PCT/KR2024/009568
(87) International publication number: WO 2025/014195

(57) **Abstract**

An electronic device is disclosed. An electronic device according to an embodiment of the present disclosure may comprise: a security module for storing security information of the electronic device and performing an operation related to security; and a processor connected to the security module, wherein the processor is configured to generate, in response to identifying a request to store an authentication key, an authentication key on the basis of an identifier of a main integrated circuit (IC) on which the processor is disposed and a first security algorithm, and transmit the generated authentication key to the security module, and wherein the security module is configured to store the authentication key in the security module when there is no authentication key stored in the security module.

## Description

### [Technical Field]

Embodiments disclosed in this document relate to an electronic device and an operating method thereof.

### [Background Art]

With the development of information and communication technology, electronic devices such as TVs and monitors may provide users with various types of services, and the importance of user information protection is also growing. For the security of an electronic device, the electronic device may use a trust zone (TZ) built into its central processing unit (CPU) to generate a secure area at the hardware level and then provide a secure execution environment. The TZ may establish a secure booting and execution environment, and provide isolation between applications and an operating system to prevent the spread of malicious codes and strengthen the security of the system. The electronic device may securely store important information using a flash memory. Furthermore, the electronic device may store security keys or encrypted contents related to digital rights management (DRM) via the flash memory, and may prevent unauthorized access and data leakage from/to the outside using technologies such as e.g., data encryption.

### [Disclosure of Invention]

### [Solution to Problems]

In the event that a malicious attacker attempts to insert and execute malicious codes or data into a flash memory of an electronic device, unauthorized access and manipulation of the electronic device may occur. Therefore, it is necessary to strengthen the security functions to prevent such an occurrence.

Based on the discussion mentioned above, the present disclosure provides an apparatus and method for strengthening the security function of an electronic device.

An electronic device according to an embodiment of the present disclosure may include a security module for performing operations related to storage and security of security information of the electronic device, and a processor connected to the security module. In an embodiment, the processor, based on identifying an authentication key storage request, may generate an authentication key using an identifier of a main integrated circuit (IC) in which the processor is located and a first security algorithm. In an embodiment, the processor may transmit the generated authentication key to the security module. In an embodiment, in case that there is no authentication key stored in the security module, the security module may store the authentication key in the security module.

In an embodiment, the processor may identify a security key storage request. In an embodiment, the processor may generate a session key based on the authentication key and a second security algorithm. In an embodiment, the processor may encrypt the security key based on the session key. In an embodiment, the processor may transmit the encrypted security key to the security module.

In an embodiment, the security module, in response to receiving the encrypted security key, may generate the session key based on the authentication key. In an embodiment, the security module may identify the security key by decrypting the encrypted security key based on the session key. In an embodiment, the security module may store the security key in the security module.

In an embodiment, the processor may transmit a security request for first data to the security module. In an embodiment, the processor may receive a security response including second data generated based on the first data, from the security module.

In an embodiment, the security module, in response to receiving the security request for the first data from the processor, may identify a security key for the first data. In an embodiment, the security module may perform an operation on the first data using the security key to generate the second data. In an embodiment, the security module may transmit the generated second data to the processor.

In an embodiment, the processor may encrypt the first data using the security key. In an embodiment, the processor may transmit a security request for the encrypted first data to the security module.

In an embodiment, the security request may be an encryption request for the first data. In an embodiment, the second data may be generated by encrypting the first data using the security key.

In an embodiment, the security request may be a decryption request for the first data. In an embodiment, the second data may be generated by decrypting the first data using the security key.

In an embodiment, the security request may be a signature generation request for the first data. In an embodiment, the second data may be data related to a signature of the first data, generated using the security key.

In an embodiment, the processor may determine whether the received second data is valid.

In an embodiment, the authentication key storage request may be a storage request identified in an initial manufacturing process of the electronic device.

In an embodiment, the electronic device may include a communication unit connected to the processor. In an embodiment, the processor may transmit the second data to an IoT server via the communication unit.

In an embodiment, communication between the security module and the processor may be encrypted and decrypted using the authentication key.

An operating method of an electronic device according to an embodiment of the present disclosure may include generating an authentication key using an identifier of a main integrated circuit (IC) of the electronic device and a first security algorithm, based on identifying an authentication key storage request. In an embodiment, the operating method of the electronic device may include storing the authentication key in a security module, in case that there is no authentication key stored in the security module.

In an embodiment, the operating method of the electronic device may include identifying a security key storage request. In an embodiment, the operating method of the electronic device may include generating a session key based on the authentication key and a second security algorithm. In an embodiment, the operating method of the electronic device may include encrypting the security key based on the session key.

In an embodiment, the operating method of the electronic device may include generating the session key based on the authentication key. In an embodiment, the operating method of the electronic device may include identifying the security key by decrypting the encrypted security key based on the session key. In an embodiment, the operating method of the electronic device may include storing the identified security key in the security module.

In an embodiment, the operating method of the electronic device may include transmitting a security request for first data to the security module. In an embodiment, the operating method of the electronic device may include receiving a security response including second data generated based on the first data, from the security module.

In an embodiment, the operating method of the electronic device may include identifying a security key for the first data in response to receiving the security request for the first data. In an embodiment, the operating method of the electronic device may include generating the second data by performing an operation on the first data using the security key. In an embodiment, the operating method of the electronic device may include transmitting the generated second data to the processor.

In an embodiment, the operating method of the electronic device may include encrypting the first data using the security key. In an embodiment, the operating method of the electronic device may include transmitting a security request for the encrypted first data to the security module.

In an embodiment, the security request may be an encryption request for the first data. In an embodiment, the second data may be generated by encrypting the first data using the security key.

Embodiments of the present disclosure provide the effect of enabling easy and secure storage of important information related to various applications of an electronic device.

Further, embodiments of the present disclosure provide the effect of enabling the secure use of important information stored in an electronic device.

The effects that can be obtained from the present disclosure are not limited to those mentioned in the various embodiments, and other effect not mentioned herein will be clearly understood by one of ordinary skill in the art from the following description.

### [Brief Description of Drawings]

FIG. 1 illustrates a block diagram of an electronic device according to an embodiment.
FIG. 2 illustrates a detailed block diagram of an electronic device according to an embodiment.
FIG. 3 illustrates an example of a security system of an electronic device according to an embodiment.
FIG. 4 illustrates an example signaling flow for generating an authentication key of an electronic device according to an embodiment.
FIG. 5 illustrates an example signaling flow for key storage of an electronic device according to an embodiment.
FIG. 6 illustrates an example signaling flow for key usage of an electronic device according to an embodiment.
FIG. 7 illustrates an example operation flow of an electronic device according to an embodiment.

In conjunction with the description of the drawings, the same or similar reference numerals may be used for the same or similar components.

### [Mode for the Invention]

Hereinafter, embodiments of the disclosure will be described in detail with reference to the drawings such that a person of ordinary skill in the art (hereinafter, referred to as 'one skilled in the art') may easily implement the embodiments. However, the disclosure may be implemented in various different forms and is not limited to the embodiments described herein. In relation to the description of the drawings, the same or similar reference numerals may be used for the same or similar components. Further, in the drawings and the related description, descriptions of well-known functions and configurations may be omitted for clarity and conciseness.

Hereinafter, embodiments of the disclosure will be described in detail with reference to the drawings such that a person of ordinary skill in the art (hereinafter, referred to as 'one skilled in the art') may easily implement the embodiments. However, the disclosure may be implemented in various different forms and is not limited to the embodiments described herein. In relation to the description of the drawings, the same or similar reference numerals may be used for the same or similar components. Further, in the drawings and the related description, descriptions of well-known functions and configurations may be omitted for clarity and conciseness.

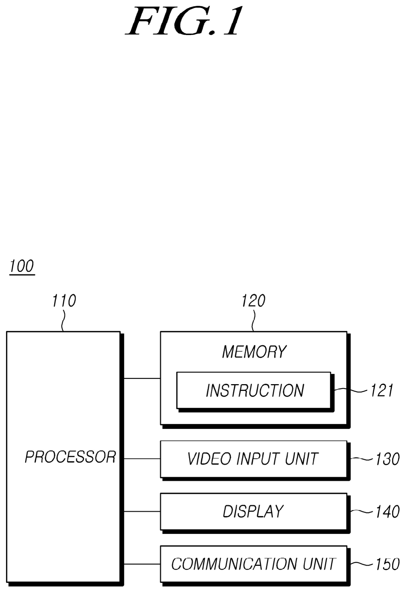

FIG. 1 illustrates a block diagram of an electronic device according to an embodiment. Further, the electronic device 100 may be a wearable terminal equipment such as e.g., a smart watch or smart glasses capable of performing various computing tasks, such as video playback, communication or the like. The electronic device 100 may include any terminal of various forms as mentioned above, but not limited thereto.

According to an embodiment, a memory 120, as a storage medium used by the electronic device 100, may store data such as at least one instruction 121 or setting information corresponding to at least one program. The program may include an Operating System (OS) program and various application programs.

In an embodiment, the memory 120 may store pairing information of an external electronic device located adjacent to the electronic device 100. In an embodiment, the pairing information may include device information of the external electronic device, information on another external electronic device or a remote control device paired with the external electronic device, information on a paring method (e.g., Bluetooth, Wi-Fi) between the external electronic device and the other external electronic device or the remote control device, and information on a pairing history between the external electronic device and the other external electronic device or the remote control device.

In an embodiment, the memory 120 may include at least one type of storage medium among flash memory type, hard disk type, multimedia card micro type, card-type memory (e.g., SD or XD memory, etc.), random access memory (RAM), static random access memory (SRAM), read only memory (ROM), electrically erasable programmable ROM (EEPROM), programmable ROM (PROM), magnetic memory, magnetic disk, optical disk or the like.

According to an embodiment, a video input unit 130 may receive video and video information via a tuner (not shown), an input/output unit (not shown), or a communication unit 150. The video input unit 130 may include at least one of the tuner and the input/output unit. The tuner may tune and select only a frequency of a broadcast channel to be received by the electronic device 100 among a lot of radio wave components through amplification, mixing, resonance, and the like of a broadcast signal received by wire or wirelessly. The broadcast signal may include video, audio, and additional data (e.g., electronic program guide (EPG)). The tuner may receive a real-time broadcast channel (or real-time viewing video) from various broadcast sources such as terrestrial broadcasting, cable broadcasting, satellite broadcasting, internet broadcasting or the like. The tuner may be implemented in an integrated form with the electronic device 100 or as a separate tuner electrically connected to the electronic device 100. The input/output unit may include at least one of a High Definition Multimedia Interface (HDMI) input port, a component input jack, a PC input port, and a USB input jack, which may receive video and video information from an external device of the electronic device 100 under the control of a processor 110. It would be apparent to those skilled in the art that the input/output unit may be added, deleted, and/or changed depending on the performance and structure of the electronic device 100.

According to an embodiment, a display 140 may perform functions for outputting information in the form of numbers, characters, images, and/or graphics. The display 140 may include at least one hardware module for outputting the information. The at least one hardware module may include, for example, at least one of a Liquid Crystal Display (LCD), a Light Emitting Diode (LED), a Light Emitting Polymer Display (LPD), an Organic Light Emitting Diode (OLED), an Active Matrix Organic Light Emitting Diode (AMOLED), or a Flexible LED (FLED). The display 140 may display a screen corresponding to data received from the processor 110. The display 140 may be referred to as an 'output unit' or a 'display unit' or any other terms having an equivalent technical meaning thereto.

According to an embodiment, a communication unit 150 may provide a wired/wireless communication interface that enables communication with external devices. The communication unit 150 may include at least one of wired Ethernet, a wireless LAN communication unit, and a short-range communication unit. The wireless LAN communication unit may include, for example, Wi-Fi, and may support the wireless LAN standard (IEEE 802.11x) of the Institute of Electrical and Electronics Engineers (IEEE). The wireless LAN communication unit may be wirelessly connected to an Access Point (AP) under the control of the processor 110. The short-range communication unit may perform short-range wireless communication with an external device under the control of the processor 110. The short-range communication may include Bluetooth, Bluetooth Low Energy, Infrared Data Association (IrDA), Ultra-Wide Band (UWB), and Near Field Communication (NFC). The external device may include a server device and a mobile terminal (e.g., phone, tablet, etc.) that provide video services and the like.

According to an embodiment, the processor 110 may execute at least one instruction 121 stored in the memory 120 to execute an operation or data processing related to the control and/or communication of at least one other component of the electronic device 100. The processor 110 may include at least one of a central processing unit (CPU), a graphics processing unit (GPU), a micro controller unit (MCU), a sensor hub, a supplementary processor, a communication processor, an application processor, an application specific integrated circuit (ASIC), or a field programmable gate array (FPGA), and may have a plurality of cores.

In an embodiment, the processor 110 may, for example, execute software to control at least one other component (e.g., a hardware or software component) of the electronic device 100 connected to the processor 110, and may perform various data processing or operations. According to an embodiment, as at least part of the data processing or operations, the processor 110 may store instructions or data received from other components in a volatile memory, process the instructions or data stored in the volatile memory, and store the resulting data in a non-volatile memory. According to an embodiment, the processor 110 may include a main processor (e.g., a central processing unit or an application processor) or an auxiliary processor (e.g., a graphics processing unit, a neural processing unit (NPU), an image signal processor, a sensor hub processor, or a communication processor) that may operate independently or in conjunction therewith. For example, in case that the electronic device 100 includes a main processor and an auxiliary processor, the auxiliary processor may be set to use less power than the main processor or to be specialized for a designated function. The auxiliary processor may be implemented separately from or as a part of the main processor.

In an embodiment, the processor 110 may acquire video frame data from at least one of the memory 120, the video input unit 130, or the communication unit 150. The video frame data may refer to data regarding frames that makes up a video. For example, the video frame data may be stored in the memory 120 (e.g., as recorded and stored video). For example, the video frame data may be acquired from the communication unit 150 or the video input unit 130 (e.g., as real-time streaming video).

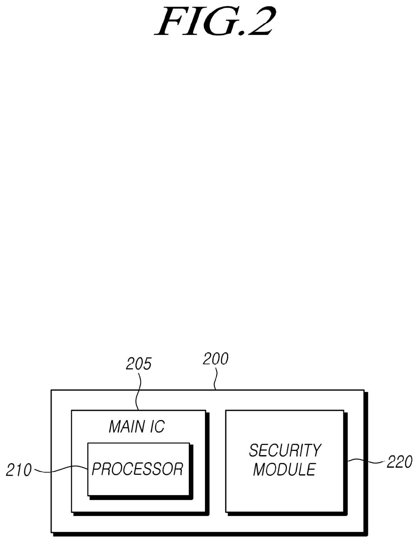

FIG. 2 illustrates a detailed block diagram of an electronic device according to an embodiment. An electronic device 200 may refer to a device corresponding to the electronic device 100. In the description of FIG. 2, the description of portions overlapping the description of FIG. 1 may be omitted. The block diagram configuration of FIG. 2 shows only the components necessary for describing this invention, but contents that are obvious to those of ordinary skill in the technical field of the present disclosure may be omitted or added thereto.

Referring to FIG. 2, the electronic device 200 according to an embodiment may include a main IC 205, a processor 210 disposed in the main IC 205, and a security module 220. The processor 210 may include a component corresponding to the processor 110 of FIG. 1. The components shown in FIG. 2 illustrate only the components necessary for describing the present invention, and other components necessary to perform the functions of the electronic device may be included in addition to the components shown.

In an embodiment, the main integrated circuit (IC) may refer to an integrated circuit disposed on a main board included in the electronic device 200. Various components (e.g., a processor, a memory, an input/output device, a graphics processing unit, a device for network connection) for performing the functions of the electronic device 200 may be arranged in the main IC 205.

In an embodiment, the processor 210 may be disposed in the main IC 205 of the electronic device. The processor 210 may transmit instructions and data to the main IC 205, and the main IC 205 may allocate resources necessary for the processor 210 to perform tasks and provide the same to the processor 210.

In an embodiment, the processor 210 may execute software to control the security module 220 of the electronic device 100 connected to the processor 110, and may perform various data processing or operations.

In an embodiment, the electronic device 200 may use a hardware security technology (e.g., Trust Zone) to create two isolated execution environments (a secure world and a normal world) within the processor 210 and run securely separated software. A general application program and an operating system may be executed in the normal world, and secure security tasks may be performed in the secure world.

In an embodiment, the secure world and the normal world of the electronic device 200 may be areas isolated by hardware (H/W) and software (S/W). Resources used in each area, such as e.g., memory, register, cache or the like, may be allocated in each area. In case that a process created in the normal world requests access to the secure world, authentication may be performed on the process. In case that the process is an unauthenticated process for the secure world, access of the process to the secure world may be restricted.

In an embodiment, the processor 210 may perform operations related to the security of the electronic device 200. The operations related to the security of the electronic device 200 may include generation of an authentication key (AK), generation and storage of information related to the security of the electronic device 200, encryption and decryption of information related to the security of the electronic device 200, and generation of a digital signature for information related to the security of the electronic device 200. The operations related to security may be performed in a secure world.

In an embodiment, the processor 210 may generate an authentication key (AK) for the electronic device 200. The authentication key may refer to a key used to perform a process related to the authentication of the electronic device 200. Based on the authentication key, encrypted information (e.g., a secret key (security key) used to encrypt important information, a session key for generating a secret key, data regarding a digital signature, or the like) used in various procedures may be generated.

In an embodiment, the processor 210 may generate an authentication key based on a unique identifier assigned to the main IC of the electronic device 200 and a predetermined security algorithm.

In an embodiment, the authentication key may be generated in response to the electronic device 200 identifying an authentication key generation request, wherein the authentication key generation request may be identified during a manufacturing process of the electronic device 200. For example, it may be generated during an initial security setup stage of the electronic device 200. The authentication key may be a value generated based on an identifier of the main IC 205. The authentication key may not change as long as the identifier of the main IC 205 does not change. Therefore, in case that the main IC is replaced due to a malfunction, repair, and the like of the electronic device 200, the previously generated authentication key may no longer be valid.

In an embodiment, the security module 220 may refer to a hardware security module included in the electronic device 200. The security module 220 may also be referred to as a secure element (SE). The security module 220 may be included in the electronic device 200 in the form of a separate chip distinguished from the main IC 205. The security module 220 may have an independent memory, and the memory of the security module 220 may be distinguished from the memory of the main IC 205 (e.g., memory 120) by hardware. The security module 220 may securely store security data (e.g., an authentication key) and provide operational functions such as encryption and decryption.

In an embodiment, although not shown in the drawings, the security module 220 may include components such as an operation unit for performing security-related operations, a storage unit for storing security-related information, an encryption engine, a random number generator and the like. The security module 220 may operate separately from the processor 210 (e.g., data storage, encryption, decryption, signing, etc.) based on those components.

In an embodiment, the security module 220 may protect the electronic device 200 from physical attacks, cyber-attacks, data theft, and the like from the outside. The security module 220 may operate independently in a secure environment and may be used as a storage for secure keys and authentication information. Further, the security module may ensure the integrity and confidentiality of data using security protocols and may communicate with other components of the electronic device 200 (e.g., the processor 210) through encrypted communication.

In an embodiment, data stored in the storage area of the security module 220 may not be leaked to the outside.

In an embodiment, the security module 220 may transmit and receive data to and from the processor 210, and a communication interface for communication between the security module 220 and the processor 210 may be encrypted using the authentication key generated by the processor 210.

In an embodiment, the security module 220 may store the authentication key received from the processor 210. The security module 220 may determine whether there is the authentication key pre-stored in the security module 220. In case that the security module 220 determines that no pre-stored authentication key exists in the security module 220, it may store the information about the authentication key received from the processor 210. In case that the security module 220 determines that a pre-stored authentication key exists in the security module 220, the security module 220 may not store the authentication key received from the processor 210. In other words, only the authentication key generated by the processor 210 during the initial manufacturing process may be stored in the security module, and accordingly, no invalid authentication key can be stored due to an attacker's attack.

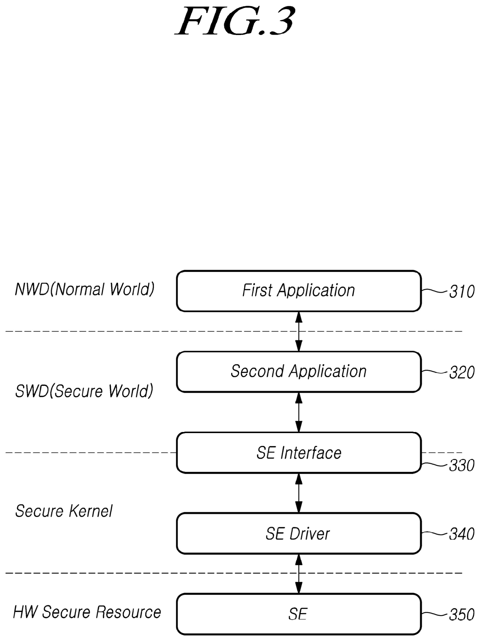

FIG. 3 illustrates an example of a security system of an electronic device according to an embodiment. In a security system, an electronic device 200 may include a processor 210 and a security module 220. In the following description, a main IC may include a normal world (NWD), a secure world (SWD), and a secure kernel, and a secure element (SE) may include HW secure resources. The main IC may refer to a main integrated circuit where the processor 210 of FIG. 2 is located, and an SE 350 may be a component corresponding to the security module 220 of FIG. 2.

Referring to FIG. 3, a first application (client application) 310 and a second application 320 may refer to applications that operate in two separate areas (e.g., a normal world and a secure world) provided by a processor (e.g., the processor 210), respectively.

In an embodiment, the first application 310 (e.g., the client application) may be an application executed in the normal world. The first application 310 may request the second application 320 to generate an authentication key. Further, the first application 310 may request the second application 320 to store important key information related to the security of the electronic device in the SE 350.

In an embodiment, the second application 320 may be an application operating in the secure world. In case that the second application 320 is requested to generate the authentication key from the first application 310, the second application 320 may generate the authentication key based on a unique secure ID assigned to the main IC. The second application 320 may deliver the generated authentication key, the important key information received from the first application 310, and the like to the SE 350.

In an embodiment, an SE interface 330 may refer to a communication interface for transferring data using an SE driver 340.

In an embodiment, the SE driver 340 may include a component for performing communication between the main IC and the SE. The SE driver 340 may perform data communication between the main IC and the SE 350. The SE driver 340 may convert data for communication between the main IC and the SE 350.

In an embodiment, the SE 350 may refer to a security module disposed in an electronic device (e.g., the electronic device 200). The SE 350, which is a separate hardware component included in the electronic device 200, may include a separate storage space inside the SE 350, and may perform encryption and operation processing using the stored important key.

In an embodiment, a key stored in the SE 350 cannot be leaked outside the SE 350, and the main IC may acquire and use only the result encrypted and operated within the SE 350 using the key.

Based on the authentication key generated based on the identifier of the main IC, various keys for the security of the electronic device may be generated. Therefore, in case that the authentication key is leaked to the outside or a modified authentication key is inserted by an attacker, the electronic device may not operate properly. Therefore, it is necessary to prevent the authentication key from being leaked to the outside or being changed by an attacker, and to this end, a separate hardware component called an 'SE' may be included in the electronic device according to the present disclosure. The SE is a separate component from the main IC and may include a separate storage space distinct from the main IC. Furthermore, the SE may not only securely store information about important authentication information, authentication keys, security keys or the like, but the SE may also independently perform operational functions such as encryption and decryption. Accordingly, the communication between the SE and the main IC is always conducted using encrypted data, without leaking the authentication key or important keys to the outside, thus preventing the leakage of important information to the outside or the infiltration of malicious data that could be inserted by an attacker.

The generation of the authentication key may be performed in the secure world using an encryption library of the main IC, and the generated authentication key may be stored in the SE during the first boot-up procedure in the manufacturing process. The authentication key may be generated based on the identifier of the main IC, and the authentication key stored in the SE is a value that cannot be changed or modified again once it has been stored. Accordingly, the security of the electronic device may be maintained against hacking of the main IC or an attack by a replaced main IC. The authentication key may be used as a parameter value for a session key for encrypting the communication channel between the main IC and the SE. A session key may be generated every time the first application 310 requests it, and in case that the main IC is replaced, the authentication key generated based on the unique secure ID of the main IC would have been changed, so that communication with the SE may fail and accordingly security may be maintained. Hereinafter, with reference to the drawings, a signaling flow of the electronic device for generating the authentication key, a signaling flow for generating and storing important key information (e.g., a security key) in the SE, and a signaling flow of the electronic device for acquiring the important key information stored in the SE will be described.

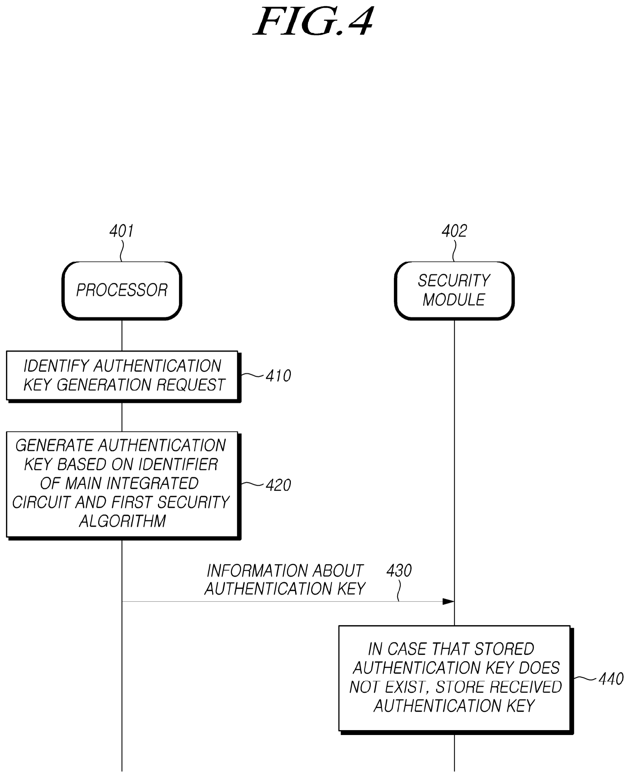

FIG. 4 illustrates a signaling flow for generating an authentication key of an electronic device according to an embodiment. The electronic device of FIG. 4 may be a device corresponding to the electronic device 200 of FIG. 2. The processor 401 of FIG. 4 may be a device corresponding to the processor 210 of FIG. 2 and the processor disposed in the main IC of FIG. 3. The security module 402 of FIG. 4 may be a device corresponding to the security module 220 of FIG. 2 and the SE 350 of FIG. 3. FIG. 4 relates to a method in which a processor 401 and a security module 402 disposed in an electronic device generate and store an authentication key in an initial stage of a manufacturing process of the electronic device. In the description of FIG. 4, descriptions of contents overlapping those described in FIGS. 1 to 3 may be omitted.

According to an embodiment, in operation 410, the processor 401 may identify an authentication key (AK) generation request. The authentication key generation request may be identified when the electronic device is first booted up during its manufacturing process. The authentication key generation request may be identified from a first application (e.g., the first application 310).

According to an embodiment, in operation 420, the processor 401 may generate an authentication key based on an identifier of a main integrated circuit (IC) and a first security algorithm. A unique identifier (unique ID) may be assigned to the main IC of the electronic device during the manufacturing process. The processor 401 may generate the authentication key using the unique identifier of the main IC and accordingly one unique authentication key may be generated for each electronic device. The first security algorithm may refer to a security algorithm to be used for generating the authentication key.

According to an embodiment, in operation 430, the processor 401 may transmit information about the authentication key to the security module 402. The information about the authentication key may include information about the authentication key generated in operation 420. The processor 401 may use an SE communication interface to transmit the information about the authentication key to the security module 402.

According to an embodiment, in operation 440, in case that a stored authentication key does not exist, the security module 402 may store the information about the authentication key received from the processor 401 in the security module 402.

In an embodiment, the security module 402 may determine whether a stored authentication key exists in the security module 402. The generation and storage of the authentication key shown in FIG. 4 is an operation performed during the manufacturing process of the electronic device, and the authentication key stored in the security module 402 cannot be leaked to the outside or changed once it has been stored. Thus, the security module 402 may determine whether a pre-stored authentication key exists, in case of receiving information about the authentication key from the processor 401. In case that the security module 402 determines that a pre-stored authentication key exists in the security module 402, the security module 402 may not store the authentication key transmitted by the processor 401. In case that the security module 402 determines that a pre-stored authentication key does not exist in the security module 402, the security module 402 may store the authentication key received from the processor 401 in the storage space of the security module 402.

Although not shown in the drawings, the operations 410 and 420 of the processor 401 may be operations performed in a normal world or a secure world of the processor 401. For example, a first application may transmit an authentication key installation request to a second application, and accordingly, the second application may generate the authentication key. The second application may transfer the information about the generated authentication key to an SE interface, and the SE interface may transfer the received information about the authentication key to an SE driver. The SE driver may transmit the information about the authentication key received from the SE interface to the security module 402.

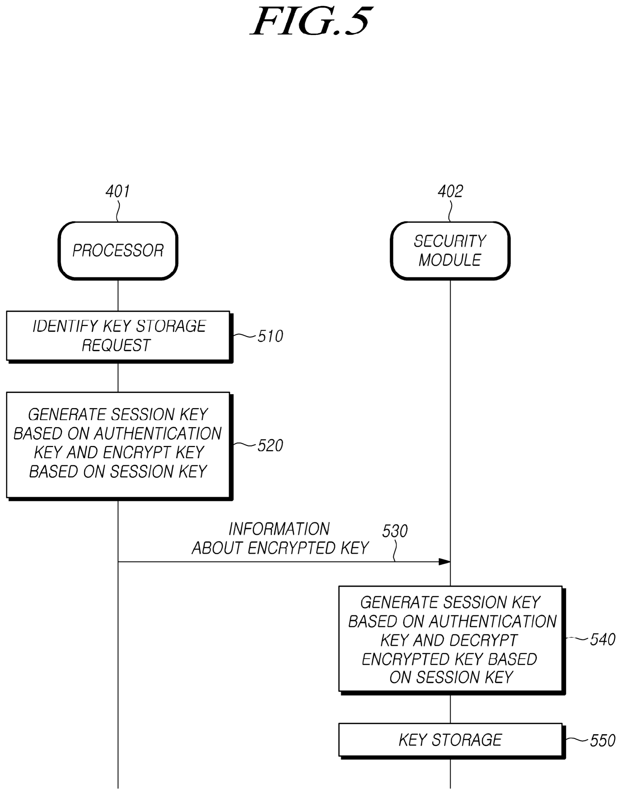

FIG. 5 illustrates a signaling flow for key storage of an electronic device according to an embodiment. The electronic device of FIG. 5 may be a device corresponding to the electronic device 200 of FIG. 2. FIG. 5 relates to a process in which the electronic device stores a key related to the security of the electronic device in the security module 402 after storing an authentication key in the security module 402 according to FIG. 4. In other words, the operations of the processor 401 and the security module 402 described in FIG. 5 may be operations performed after the operations according to the description of FIG. 4 have been performed. In the description of FIG. 5, descriptions of contents overlapping those described in FIGS. 1 to 4 may be omitted.

According to an embodiment, in operation 510, the processor 401 may identify a key storage request. The key storage request identified in operation 510 may be a request to store a security key (secret key) used by the electronic device to perform a specific procedure (e.g., a registration procedure of an IoT server of the electronic device) in the security module 402.

In an embodiment, the key storage request may be identified from the first application. For example, in case that the first application intends to generate and store a security key necessary to perform the registration procedure of the electronic device with an IoT server, the processor 401 may identify the key storage request.

According to an embodiment, in operation 520, the processor 401 may generate a session key based on the authentication key and encrypt the key based on the generated session key. The session key may refer to a parameter value generated to encrypt the key according to the identified key storage request.

According to an embodiment, in operation 530, the processor 401 may transmit information about the key encrypted according to operation 520 to the security module 402. Since the key information encrypted using the session key generated based on the authentication key may be decrypted only by a device that knows the authentication key, the security of the electronic device may be strengthened through such an operation.

According to an embodiment, in operation 540, the security module 402 may generate a session key based on the authentication key stored in the security module 402, and decrypt the encrypted key information received from the processor 401 using the generated session key. Since a stored authentication key (e.g., the authentication key stored in the signaling flow of FIG. 4) exists in the security module 402, the session key may be generated based on the authentication key and thus the encrypted key information may be decrypted. In case that the authentication key stored in the security module 402 is the same as the authentication key of the processor 401, the security module 402 may be able to successfully decrypt the encrypted key information, otherwise the decryption of the encrypted key information may fail.

According to an embodiment, in operation 550, the security module 402 may store the key decrypted in the operation 540. In case that the security module 402 fails to decrypt the encrypted key information in the operation 540, operation 550 may not be performed.

In an embodiment, although not shown in the drawings, the first application operating in the normal world of the electronic device may transmit a key storage request according to the operation 510 to the second application operating in the secure world, and the second application may generate a session key based on the authentication key and perform encryption on the key that the first application requested to store. Then, the second application may transfer information about the encrypted key to the SE driver through the SE interface, and the SE driver may transfer the encrypted key to the security module 402. Then, the security module 402 may generate a session key based on the authentication key stored in the security module 402 and decrypt the key using the generated session key. Thereafter, the decrypted key may be stored in the security module 402.

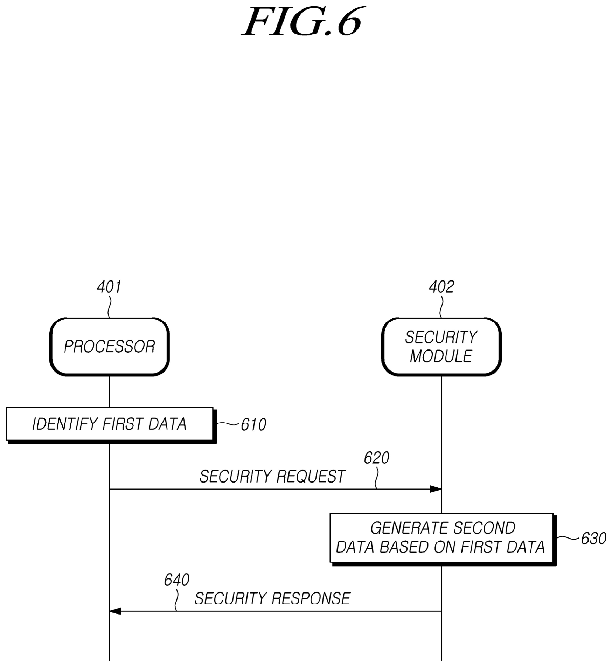

FIG. 6 illustrates a signaling flow for key usage of an electronic device according to an embodiment. The electronic device of FIG. 6 may be a device corresponding to the electronic device 200 of FIG. 2. FIG. 6 relates to a process in which the electronic device uses the key stored in the security module 402, after the electronic device has stored an authentication key in the security module 402 according to FIG. 4 and has stored important key information in the security module 402 according to FIG. 5. In other words, the operations of the processor 401 and the security module 402 described in FIG. 6 may be operations performed after the operations according to the description of FIG. 4 and the operations according to the description of FIG. 5 have been performed. In the description of FIG. 6, descriptions of contents overlapping those described in FIGS. 1 to 5 may be omitted.

According to an embodiment, in operation 610, the processor 401 may identify first data. The first data may refer to data to be encrypted and decrypted using the stored security key or for a digital signature to be generated based on the stored security key. For example, the first data may be authentication information necessary for the electronic device to register with an IoT server.

According to an embodiment, in operation 620, the processor 401 may transmit a security request to the security module 402. The security request may be a request to perform an operation related to the security of the first data using the security key. For example, the security request may be a request to encrypt the first data using the security key. For example, the security request may be a request to decrypt the first data using the security key. For example, the security request may be a request to generate signature information for the first data using the security key.

According to an embodiment, in operation 630, the security module 402 may generate second data based on the first data. The security module 402 may perform encryption or decryption on the first data, or generate a signature for the first data, based on the security key stored in the security module 402. For example, the second data may refer to the first data encrypted using the security key. For example, the second data may refer to the second data decrypted using the security key. For example, the second data may include signature information for the first data generated using the security key.

According to an embodiment, in operation 640, the security module 402 may transmit a security response to the processor 401. The security response may include the second data generated in operation 630.

Although not shown in the drawings, the processor 401 may perform a procedure for the security of the electronic device (e.g., registration with an IoT server) based on the second data included in the received security response.

Although not shown in the drawings, the processor 401 may determine whether the second data included in the received security response is valid data.

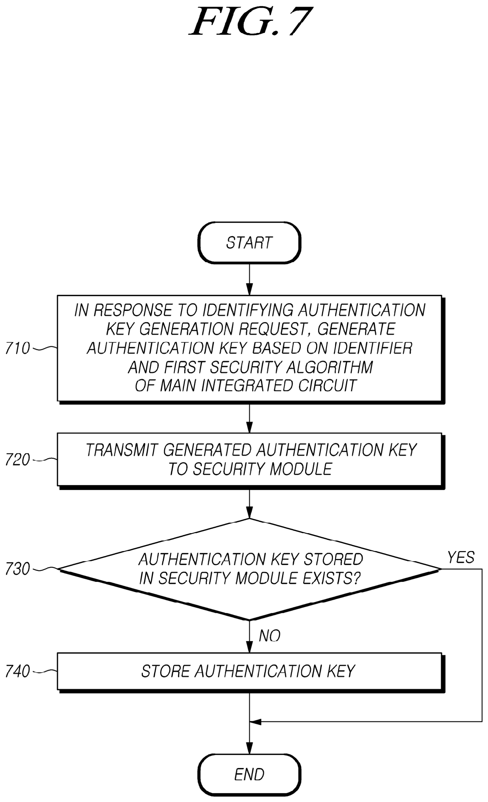

FIG. 7 illustrates an operational flow of an electronic device according to an embodiment. The electronic device of FIG. 7 may be a device corresponding to the electronic device 200 of FIG. 2, and the electronic devices of FIGS. 4 to 6. The operations of FIG. 7 may include the entire contents of operation described in FIGS. 4 and 6.

According to an embodiment, in operation 710, in response to identifying an authentication key (AK) generation request, the processor of the electronic device may generate an authentication key based on an identifier of a main integrated circuit (IC) and a first security algorithm. Operation 710 may include the entire contents of operation according to the operation 410 described in FIG. 4.

According to an embodiment, in operation 720, the electronic device may transmit the generated authentication key to the security module. The operation 720 may include the entire contents of operation according to the operation 420 and the operation 430 described in FIG. 4.

According to an embodiment, in operation 730, the security module may determine whether an authentication key stored in the security module exists. The operation 730 may include the entire contents of operation according to the operation 440 described in FIG. 4.

In an embodiment, in case that it is determined that a stored authentication key exists in the security module, the electronic device may not store the authentication key.

In an embodiment, in case that it is determined that no stored authentication key exists in the security module, the electronic device may store the authentication key in the security module.

In an embodiment, the processor of the electronic device may identify a security key storage request. The electronic device may generate a session key based on the authentication key and a second security algorithm, and then encrypt the security key based on the session key. The electronic device may transmit the encrypted security key to the security module. This operation may include the entire contents of operations described in operation 510, operation 520, and operation 530 of FIG. 5.

In an embodiment, the security module of the electronic device, in response to receiving the encrypted security key, may generate the session key based on the authentication key. The security module may identify the security key by decrypting the encrypted security key based on the session key. The security module of the electronic device may store the security key in the security module. The operation of the security module may include the entire contents of operation described in operation 540 and operation 550 of FIG. 5.

In an embodiment, the processor of the electronic device may transmit a security request for first data to the security module. The operation of the processor may include the entire contents of operation according to operation 610 and operation 620 of FIG. 6. The security module of the electronic device, in response to receiving the security request for the first data from the processor, may identify the security key for the first data. The security module of the electronic device may perform an operation on the first data using the security key to generate the second data, and may transmit the generated second data to the processor. The operation of the security module may include the entire contents of operation following operation 630 and operation 630. The processor of the electronic device may receive a security response including second data generated based on the first data, from the security module. The operation contents of the processor may include the entire contents of operation according to operation 640 of FIG. 6.

In an embodiment, the security module of the electronic device may encrypt the first data using the security key, and may transmit a security request for the encrypted first data to the security module.

In an embodiment, the security request is an encryption request for the first data, and the second data may be generated by encrypting the first data using the security key.

In an embodiment, the security request is a decryption request for the first data, and the second data may be generated by decrypting the first data using the security key.

In an embodiment, the security request is a signature generation request for the first data, and the second data may include data related to a signature of the first data generated using the security key.

In an embodiment, an authentication key storage request of operation 710 may be a storage request identified during an initial manufacturing process of the electronic device.

In an embodiment, the electronic device may transmit the second data to an IoT server using the communication unit.

The electronic device according to various embodiments of the present disclosure may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment of the present disclosure are not limited to those described above.

It should be appreciated that various embodiments of the present disclosure and the terms used therein are not intended to limit the technological features set forth herein to particular embodiments and include various changes, equivalents, or replacements for a corresponding embodiment. For example, a component expressed in the singular is to be understood as including a plurality of components unless the context clearly indicates only a singular meaning. As used in the disclosure, the term "and/or" is to be understood to encompass all possible combinations of one or more of the enumerated items. As used in the present disclosure, the terms "comprise", "have", "include", "consist of", and the like are intended only to designate the presence of features, components, parts, or combinations thereof described in the present disclosure, and the use of such terms is not intended to exclude the possibility of presence or addition of one or more other features, components, parts, or combinations thereof. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st", "2nd", or "first" or "second" may be used to simply distinguish a corresponding component from another, and does not limit the components in other aspect (e.g., importance or order).

As used in connection with various embodiments of the disclosure, the term "~ portion" or "~ module" may include a unit implemented in hardware, software, or firmware, and may interchangeably be used with other terms, for example, "logic", "logic block", "part", or "circuit". Such a "~ portion" or "~ module" may be a single integral component, or a minimum unit or a part of the component, adapted to perform one or more functions. For example, according to an embodiment, the "~ portion" or "~ module" may be implemented in the form of an application-specific integrated circuit (ASIC).

As used in connection with various embodiments of the disclosure, the term "in case that (or where) ~" may be interpreted to mean "when ~", "if ~", "in response to determining ~", or "in response to detecting ~", depending on the context. Similarly, the phrases "in case that it is determined that ~" or "in case that it is detected that ~" may be interpreted to mean "when determining ~" or "in response to determining ~" or, "when detecting ~" or "in response to detecting ~", depending on the context.

The program executed by a server device 200 as described in the disclosure may be implemented as hardware components, software components, and/or a combination of the hardware components and the software components. The program may be performed by any system capable of executing computer-readable instructions.

Software may include a computer program, a code, an instruction, or a combination of one or more of them, and may configure a processing unit to operate as desired or instruct the processing unit independently or collectively. The software may be implemented as a computer program including instructions stored in a computer-readable storage medium. The computer-readable storage media may include, for example, magnetic storage media (e.g., read-only memory (ROM), random-access memory (RAM), a floppy disk, hard disk, etc.), optical readable media (e.g., compact disc read only memory (CD-ROM), digital versatile disc (DVD)) and the like. The computer-readable storage media may be distributed over networked computer systems, so that computer-readable codes may be stored and executed in a distributed manner. The computer program product may be distributed (e.g., downloaded or uploaded) directly or online through an application store (e.g., PlayStore^{™}) or between two user devices (e.g., smartphones). If distributed online, at least part of the computer program product may be at least temporarily stored or generated in a machine-readable storage medium, such as memories of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a security module for performing operations related to storage and security of security information of the electronic device; and
a processor connected to the security module,
wherein the processor is configured to:
based on identifying an authentication key storage request, generate an authentication key using an identifier of a main integrated circuit (IC) in which the processor is located and a first security algorithm, and
transmit the generated authentication key to the security module,
wherein the security module is configured to, in case that there is no authentication key stored in the security module, store the authentication key in the security module.

2. The electronic device of claim 1, wherein the processor is configured to:
identify a security key storage request;
generate a session key based on the authentication key and a second security algorithm;
encrypt the security key based on the session key; and
transmit the encrypted security key to the security module.

3. The electronic device of claim 2, wherein the security module is configured to:
in response to receiving the encrypted security key, generate the session key based on the authentication key;
identify the security key by decrypting the encrypted security key based on the session key; and
store the security key in the security module.

4. The electronic device of claim 3, wherein the processor is configured to:
transmit a security request for first data to the security module; and
receive a security response including second data generated based on the first data, from the security module.

5. The electronic device of claim 4, wherein the security module is configured to:
in response to receiving the security request for the first data from the processor, identify a security key for the first data;
perform an operation on the first data, using the security key, to generate the second data; and
transmit the generated second data to the processor.

6. The electronic device of claim 5, wherein the processor is configured to:
encrypt the first data using the security key; and
transmit a security request for the encrypted first data to the security module.

7. The electronic device of claim 5,
wherein the security request is an encryption request for the first data, and
wherein the second data is generated by encrypting the first data using the security key.

8. The electronic device of claim 5,
wherein the security request is a decryption request for the first data, and
wherein the second data is generated by decrypting the first data using the security key.

9. The electronic device of claim 5,
wherein the security request is a signature generation request for the first data, and
wherein the second data is data related to a signature of the first data, generated using the security key.

10. The electronic device of claim 5, wherein the processor is configured to determine
whether the received second data is valid.

11. The electronic device of claim 1, wherein the authentication key storage request is a
storage request identified in an initial manufacturing process of the electronic device.

12. The electronic device of claim 6, further comprising a communication unit connected
to the processor,
wherein the processor is configured to transmit the second data to an IoT server via the communication unit.

13. The electronic device of claim 11, wherein communication between the security module and the processor is configured to be encrypted and decrypted using the authentication key.

14. A method of operating an electronic device, comprising:
based on identifying an authentication key storage request, generating an authentication key using an identifier of a main integrated circuit (IC) of the electronic device and a first security algorithm; and
storing the authentication key in a security module, in case that there is no authentication key stored in the security module.

15. The operating method of claim 14, further comprising:
identifying a security key storage request;
generating a session key based on the authentication key and a second security algorithm; and
encrypting the security key based on the session key.
